(19) Europäisches Patentamt
European Patent Office
Office européen des brevets

(11) **EP 1 550 297 B1**

(12) **EUROPEAN PATENT SPECIFICATION**

(45) Date of publication and mention
of the grant of the patent:
**18.03.2009 Bulletin 2009/12**

(51) Int Cl.:
***H04N 1/32*** (2006.01)

(21) Application number: **03798257.6**

(22) Date of filing: **11.08.2003**

(86) International application number:
**PCT/IB2003/003658**

(87) International publication number:
**WO 2004/030341 (08.04.2004 Gazette 2004/15)**

(54) **FINGERPRINT EXTRACTION**

FINGERABDRUCKEXTRAKTION

EXTRACTION DE CONDENSES

(84) Designated Contracting States:
**AT BE BG CH CY CZ DE DK EE ES FI FR GB GR
HU IE IT LI LU MC NL PT RO SE SI SK TR**

(30) Priority: **30.09.2002 EP 02079072**

(43) Date of publication of application:
**06.07.2005 Bulletin 2005/27**

(73) Proprietor: **Gracenote, Inc.
Emeryville, CA 94608 (US)**

(72) Inventor: **HAITSMA, Jaap, A.
NL-5656 AA Eindhoven (NL)**

(74) Representative: **Clark, Jane Anne et al
Mathys & Squire LLP
120 Holborn
London EC1N 2SQ (GB)**

(56) References cited:
**WO-A-02/065782            US-A- 5 436 653
US-A- 5 612 729            US-A- 5 621 454
US-B1- 6 266 429**

**Description**

FIELD OF THE INVENTION

The invention relates to a method and arrangement for extracting a fingerprint from a media signal.

BACKGROUND OF THE INVENTION

A fingerprint, also often referred to as signature or hash, is a sequence of bits that is derived from multimedia content, e.g. an audio song, an image, a video clip, etc. Multimedia fingerprints are used, inter alia, in the field of authentication where it is desired to verify whether received content is original or detect whether the content has been tampered with. Fingerprints are also used to identify media content. A service that is likely to become very popular in the near future is audio identification. A fingerprint being derived from an unknown piece of music is sent to a database where the title, artist and other metadata is looked up and returned to the consumer.

A known method of extracting a fingerprint from a media signal is disclosed in Applicant's International Patent Application WO 02/065782. A schematic diagram of this prior-art method is shown in Fig. 1. The media signal (here an audio song) is divided into overlapping frames (101). A spectral representation of each frame is obtained by performing a Fast Fourier Transform (102). The energy of the audio signal in 33 logarithmically spaced sub-bands is subsequently computed (103). The bands lie in the range of 300-2000Hz which is perceptually the most relevant range. The 33 energy levels constitute a sequence of perceptual property samples of the respective audio signal frame. In order to be invariant with respect to the absolute loudness of the audio signal and to prevent a major single audio frequency from producing identical sequences for successive frames, a simple 2-dimensional filter (104) is applied to the spectrogram prior to obtaining 32 differential property samples. The sequence is subsequently converted into a bit string by an appropriate thresholding operation (105). More particularly, a sub-band in a particular frame is assigned a bit '1' if the energy difference with its neighboring sub-band is larger than the energy difference with its neighboring sub-band in the previous frame. Otherwise, the fingerprint bit is '0'.

The known method produces a string of 32 bits for each audio frame (≈0.4 sec). The frames are preferably overlapping (e.g. by a factor of 31/32) so that the bit strings change slowly with time. This makes the fingerprint extraction invariant with respect to time shifting and frame boundary positioning. Typically, blocks of 256 overlapping frames, i.e. 256x32=8192 bits ( ≈3 sec of audio) are used to identify a song.

The prior-art fingerprint extraction method has turned out to be very robust against almost all commonly used audio processing steps such as MP3 encoding, sample rate conversion, D/A and A/D conversion, equalization. However, it is not very robust against speed changes. It is quite common for radio stations to speed up audio by a few percent. They supposedly do this for two reasons. First, the duration of songs is then shorter and therefore it enables them to broadcast more commercials. Secondly, the beat of the song is faster and listeners seem to prefer this. The speed changes typically lie between zero and four percent.

US-A-5,621,454 describes a method and system for producing a signature characterizing an interval of a video signal representing a picture for use in broadcast segment recognition. The signature is produced based on portions of the video signal representing corresponding regions of the picture. A first signature is formed having a plurality of values each of which is based on a respective one of the portions of the video signal and a second signature is formed also having a plurality of values each based on respective ones of a plurality of shifted portions of the video signal. The respective values of the first and second signatures are compared and bit values of a mask word are established on the basis of this comparison.

OBJECT AND SUMMARY OF THE INVENTION

It is an object of the invention to provide an improved method and arrangement for extracting a fingerprint from a media signal.

To this end, according to the present invention, there is provided a method of extracting a fingerprint from a media signal, comprising the steps of extracting from said media signal a sequence of samples of a given perceptual property of the signal, and deriving from said sequence a binary sequence constituting said fingerprint, characterized in that the method comprises the steps of: subjecting the sequence of property samples to an auto-correlation function to obtain a sequence of auto-correlation values; comparing said auto-correlation values with respective thresholds; and determining the bits of the fingerprint from the results of said comparing step.

The present invention also provides an apparatus as set out in claim 6 and a computer program as set out in claim 7.

The method according to the invention differs from the prior-art method in that the fingerprint bits are not derived from the perceptual property of the signal as such, but from the auto-correlation of said property. The invention is based on the recognition that a speed change of an audio signal causes energy levels in sub-bands to be shifted from one sub-band to another, and exploits the insight that the auto-correlation function is shift invariant.

The auto-correlation function is well-known in the continuous (time) domain. However, we are dealing here with a finite sequence of property values (e.g. energy levels). Therefore, in a practical embodiment of the method according to the invention, the desired auto-correlation is approximated by correlating a sub-sequence of property samples with the complete sequence of property samples.

The auto-correlation function is preferably computed from a statistically significant number of property samples, which is larger than the desired number of fingerprint bits. Down-sampling of the computed auto-correlation function is provided to obtain the desired number of auto-correlation values.

BRIEF DESCRIPTION OF THE DRAWINGS

Fig. 1 shows schematically a prior-art arrangement for extracting a fingerprint from an audio signal.
Fig. 2 shows schematically an arrangement for extracting a fingerprint from an audio signal according to the invention.

DESCRIPTION OF EMBODIMENTS

Speed changes of an audio signal cause misalignment in both the temporal and frequency domain. Considering time misalignment, an audio excerpt subjected to a speed change of, say, 2% causes the 250th fingerprint of this excerpt to be extracted at the position of the 255th fingerprint of the original excerpt. Fortunately, in order to be shift-invariant, the fingerprints are constructed in such a way that they possess correlation along the time-axis. Therefore, the BER (bit error rate) between the original excerpt and the same excerpt with a speed change does not increase dramatically due to the temporal misalignment.

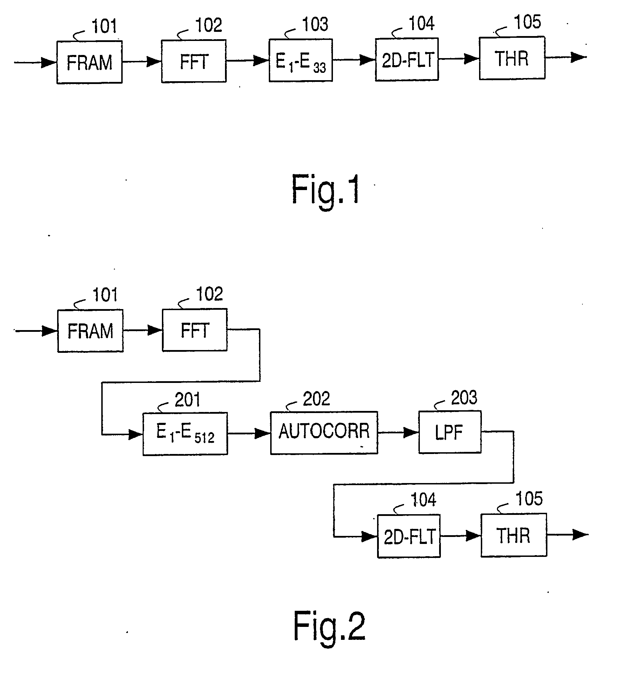

The main problem caused by large speed changes is therefore the frequency misalignment. In the prior arrangement, which is shown in Fig. 1, a 2% speedup will result in a scaling of the frequency axis of the spectrum that is obtained with the Fourier Transform.

For example, a tone of 500Hz then results in a tone of 510Hz and a tone of 1000Hz results in a tone of 1020Hz. After calculating the spectrum, the energy in logarithmically spaced bands is determined. Since the bands are logarithmically spaced, the speed change results in a shift of energy from one band to the next. The more energy that shifts from one band to the next, the greater the probability that the extracted fingerprint bits are erroneous. This is due to the fact that the fingerprint bits are determine by energy differences of neighboring bands.

It has been proposed to use a brute force approach for identifying audio with large speed changes. The brute force approach consists of storing fingerprints extracted at multiple speeds in the database, or querying the database with fingerprints that are extracted at multiple speeds. The disadvantage of this method is that the search speed and/or storage requirements increase by a factor N, where N is the number of different speeds that is necessary for a certain application.

Fig. 2 shows an arrangement for extracting a fingerprint from an audio signal according to the invention. In the Figure, the same reference numerals are used for functions that are identical with or similar to the steps that have already been discussed with reference to Fig. 1. More particularly, the audio signal is divided into overlapping frames (101) and the spectrum of each frame is computed (102).

An auto-correlation step (202) is the fundamental step to achieve the better speed-change resilience. A speed change results in a shift of the computed energy vector. Auto-correlation has the property that it is shift-invariant. As is generally known, the auto-correlation p(x) of a continuous function f(t) is:

$$\rho(x) = \int_{-\infty}^{\infty} f(t)f(t + x)dt$$

However, we are not dealing here with an infinite continuous function f(t) but a finite sequence of property samples (energies). In order to compute the auto-correlation from a statistically significant number of property samples, the energy of 512 sub-bands is computed (201) instead of 33. The bands are still logarithmic and still lie in the range of 300 to 2000Hz. Thus the bands have a smaller width. The auto-correlation is approximated by correlating a sub-sequence of energies with the complete sequence. More specifically, the auto-correlation p[x] is calculated from the sub-band energy samples E(j) as follows:

$$\rho[x] = \sum_{j=1}^{M} E(K + j)E(x + j) \ \text{for x=1,2,..,N-M}$$

where N denotes the length of the whole energy vector (here N=512), M denotes the length of the sub-sequence and K denotes the position where the sub-sequence starts in the complete sequence. Typical settings for M and K are 64 and 96, respectively. To increase robustness, the resulting auto-correlation values are optionally low-pass filtered (203). The low-pass filtered auto-correlation has 512-64 = 448 values, whereas 33 input values are required for the 2-dimensional filter (104) preceding the threshold operation (105). Therefore, the 448 auto-correlation values are down-sampled to 33 values in a down-sampler (204). The resulting fingerprint is a 32-bit string for each frame.

Although embodiments of the method and arrangement have been described with reference to audio fingerprint extraction, the invention is not restricted thereto. Applicant's International Patent Application WO 02/065782, already cited above, discloses a video fingerprint extracting method in which the fingerprint is derived from the mean luminance values of image blocks into which each image is divided. According to the invention, each image is now divided into a larger number of blocks, and a sub-set of the blocks (a "super-block") is correlated with the whole image for a number of positions of said super-block. The obtained sequence of auto-correlation values is invariant to shifts of the video image. The sequence is optionally low-pass filtered and subsequently down-sampled.

The invention can be summarized as follows. Fingerprints are bit strings extracted from a media signal (e.g. an audio or video clip) to identify said media signal. Typically, they are derived from a perceptual property of the signal, for example, the spectral energy distribution of an audio fragment or the luminance distribution of a video image. A method and arrangement for extracting a fingerprint is here disclosed which is robust with respect to shifts of the perceptual property. Such shifts occur, inter alia, when the fingerprint is derived from a logarithmically mapped spectral energy distribution of an audio signal and said audio signal is subjected to speed changes. According to the invention, the fingerprint is not derived from the perceptual property as such, but from its auto-correlation function.

**Claims**

1. A method of extracting a fingerprint from a media signal, comprising the steps of extracting (101) from said media signal a sequence of samples of a given perceptual property of the signal, and deriving (102, 201) from said sequence a binary sequence constituting said fingerprint, **characterized in that** the method comprises the steps of:

   - subjecting the sequence of property samples to an auto-correlation function (202) to obtain a sequence of auto-correlation values;
   - comparing (105) said auto-correlation values with respective thresholds; and
   - determining the bits of the fingerprint from the results of said comparing step.

2. A method as claimed in claim 1, wherein said step of subjecting the sequence of property samples to an auto-correlation function (202) comprises correlating a sub-sequence of property samples with the complete sequence of property samples.

3. A method as claimed in claim 1, wherein said step of subjecting the sequence of property samples to an auto-correlation function (202) further includes down-sampling (204) the sequence of auto-correlation values to obtain a desired number of auto-correlation values.

4. A method as claimed in claim 1, wherein said step of deriving from said media signal a sequence of perpetual property values comprises dividing an audio signal into sub-bands and computing the energies of said audio sub-bands.

5. A methods as claimed in claim 1, wherein said step of deriving from said media signal a sequence of perceptual properties comprises dividing an image into blocks and computing the luminances of said image blocks.

6. An apparatus for extracting a fingerprint from a media signal, comprising means for deriving from said media signal a sequence of samples of a given perceptual property of the signal, and means for deriving from said sequence a binary sequence constituting said fingerprint, **characterized in that** the apparatus comprises:

- means for subjecting the sequence of property samples to an auto-correlation function (202) to obtain a sequence of auto-correlation values;
- means for comparing said auto-correlation values with respective thresholds (105); and
- means for determining the bits of the fingerprint from the results of said comparing step.

**7.** A computer program comprising instructions to cause a programmable device to perform the steps of:

- deriving from a received media signal a sequence of samples of a given perceptual property of the signal;
- subjecting the sequence of property samples to an auto-correlation function (102) to obtain a sequence of auto-correlation values;
- comparing said auto-correlation values with respective thresholds (105); and
- determining the bits of the fingerprint from the results of said comparing step.

## Patentansprüche

**1.** Ein Verfahren zur Extraktion eines Fingerabdrucks aus einem Mediensignal, aufweisend die Schritte des Extrahierens (101) einer Abfolge von Proben einer bestimmten Wahrnehmungseigenschaft des Signals aus dem Mediensignal; und Erlangen (102, 201) einer binären Sequenz aus der Abfolge, welche den Fingerabdruck bildet, **dadurch gekennzeichnet, dass** das Verfahren die Schritte aufweist von:

- Unterwerfen der Abfolge von Eigenschaftsproben einer Autokorrelationsfunktion (202), um eine Abfolge von Autokorrelationswerten zu erhalten;
- Vergleichen (105) der Autokorrelationswerte mit jeweiligen Schwellenwerten; und
- Bestimmen der Bits des Fingerabdrucks aus den Ergebnissen des Vergleichsschritts.

**2.** Ein Verfahren nach Anspruch 1, wobei der Schritt des Unterwerfens der Abfolge von Eigenschaftsproben einer Autokorrelationsfunktion (202) die Korrelation einer Unterabfolge von Eigenschaftsproben mit einer kompletten Abfolge von Eigenschaftsproben aufweist.

**3.** Ein Verfahren nach Anspruch 1, wobei der Schritt des Unterwerfens der Abfolge von Eigenschaftsproben einer Autokorrelationsfunktion (202) weiterhin das Heruntersampeln (204) der Abfolge von Autokorrelationswerten enthält, um eine gewünschte Anzahl von Autokorrelationswerten zu erhalten.

**4.** Ein Verfahren nach Anspruch 1, wobei der Schritt des Erhalts der Abfolge von Wahrnehmungseigenschaftswerten aus dem Mediensignal das Teilen eines Audiosignals in Unterbänder und das Berechnen der Energien der Audiounterbänder aufweist.

**5.** Ein Verfahren nach Anspruch 1, wobei der Schritt des Erhaltens der Abfolge von Wahrnehmungseigenschaften aus dem Mediensignal das Teilen eines Bildes in Blöcke und das Berechnen der Helligkeiten der Bildblöcke aufweist.

**6.** Eine Vorrichtung zur Extraktion eines Fingerdrucks aus einem Mediensignal, aufweisend Mittel zum Erlangen einer Abfolge von Proben einer bestimmten Wahrnehmungseigenschaft des Signals aus dem Mediensignal und Mittel zum Erlangen einer binären Sequenz aus der Abfolge, welche den Fingerabdruck bildet, **dadurch gekennzeichnet, dass** die Vorrichtung aufweist:

- Mittel, mit denen die Abfolge von Eigenschaftswerten einer Autokorrelationsfunktion (202) unterworfen wird, um eine Abfolge von Autokorrelationswerten zu erhalten;
- Mittel zum Vergleichen der Autokorrelationswerte mit jeweiligen Schwellenwerten (105); und
- Mittel zum Bestimmen der Bits des Fingerabdrucks aus den Ergebnissen des Vergleichsschritts.

**7.** Ein Computerprogramm, aufweisend Anweisungen, mit denen eine programmierbare Vorrichtung veranlasst wird, die folgenden Schritte durchzuführen:

- Ermitteln - aus einem empfangenen Mediensignal - einer Abfolge von Proben einer bestimmten Wahrnehmungseigenschaft des Signals;
- Unterwerfen der Abfolge von Eigenschaftsproben einer Autokorrelationsfunktion (102), um eine Abfolge von Autokorrelationswerten zu erhalten;

- Vergleichen der Autokorrelationswerte mit jeweiligen Schwellenwerten (105); und
- Bestimmen der Bits des Fingerabdrucks aus den Ergebnissen des Vergleichsschritts.

**Revendications**

1. Procédé d'extraction d'une empreinte d'un signal de support, comprenant les étapes consistant à extraire (101) dudit signal de support une séquence d'échantillons ayant une propriété sensorielle donnée du signal, puis tirer (102, 101) de ladite séquence une séquence binaire constituant ladite empreinte, **caractérisé en ce que** le procédé comprend les étapes consistant à :

   - soumettre la séquence d'échantillons de propriété à une fonction d'autocorrélation (202) pour obtenir une séquence de valeurs d'autocorrélation ;
   - comparer (105) lesdites valeurs d'autocorrélation avec des seuils respectifs ; et
   - déterminer les bits de l'empreinte à partir des résultats de ladite étape de comparaison.

2. Procédé selon la revendication 1, dans lequel ladite étape consistant à soumettre la séquence d'échantillons de propriété à une fonction d'autocorrélation (202) comprend le fait de corréler une sous-séquence d'échantillons de propritété avec la séquence complète d'échantillons de propriété.

3. Procédé selon la revendication 1, dans lequel ladite étape consistant à soumettre la séquence d'échantillons de propriété à une fonction d'autocorrélation (202) comprend en outre le fait d'abaisser l'échantillonnage (204) de la séquence de valeurs d'autocorrélation pour obtenir un nombre voulu de valeurs d'autocorrélation.

4. Procédé selon la revendication 1, dans lequel ladite étape consistant à tirer dudit signal de support une séquence de valeurs de propriété perpétuelle comprend le fait de diviser un signal audio en sous-bandes et de calculer les énergies desdites sous-bandes audio.

5. Procédé selon la revendication 1, dans lequel ladite étape consistant à tirer dudit signal de support une séquence de propriétés sensorielles comprend le fait de diviser une image en blocs et de calculer les luminances desdits blocs d'image.

6. Dispositif permettant d'extraire une empreinte d'un signal de support, comprenant un moyen pour tirer dudit signal de support une séquence d'échantillons ayant une propriété sensorielle donnée du signal, et un moyen pour tirer de ladite séquence une séquence binaire constituant ladite empreinte, **caractérisé en ce que** le dispositif comprend :

   - un moyen pour soumettre la séquence d'échantillons de propriété à une fonction d'autocorrélation (202) pour obtenir une séquence de valeurs d'autocorrélation ;
   - un moyen pour comparer lesdites valeurs d'autocorrélation avec des seuils respectifs (105) ; et
   - un moyen pour déterminer les bits de l'empreinte à partir des résultats de ladite étape de comparaison.

7. Programme informatique comprenant des instructions destinées à faire exécuter par un dispositif programmable les étapes consistant à :

   - tirer d'un signal de support reçu une séquence d'échantillons ayant une propriété sensorielle donnée du signal ;
   - soumettre la séquence d'échantillons de propriété à une fonction d'autocorrélation (102) pour obtenir une séquence de valeurs d'autocorrélation ;
   - comparer lesdites valeurs d'autocorrélation avec des seuils respectifs (105) ; et
   - déterminer les bits de l'empreinte à partir des résultats de ladite étape de comparaison.

FRAM 101 → FFT 102 → $E_1$-$E_{33}$ 103 → 2D-FLT 104 → THR 105 →

## Fig.1

FRAM 101 → FFT 102

$E_1$-$E_{512}$ 201 → AUTOCORR 202 → LPF 203

2D-FLT 104 → THR 105 →

## Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02065782 A
- US 5621454 A